# EUROPEAN PATENT APPLICATION

(11) **EP 2 309 239 A1**
(43) Date of publication of application: **13.04.2011**
(21) Application number: 09275099.1
(22) Date of filing: 12.10.2009
(51) Int. Cl.: G01K 13/02

(54) **Total air temperature sensing device**

(71) Applicant: BAE Systems PLC, London SW1Y 5AD (GB)
(72) Inventor: The designation of the inventor has not yet been filed
(74) Representative: BAE SYSTEMS plc Group IP Department

(57) **Abstract**

A total air temperature sensing device is disclosed. The device includes a conduit through which an air flow can be maintained; a cross member housed in the conduit and having a leading edge which is profiled so as to bring a portion of the air flow to rest at a stagnation region on the cross member; at least one temperature sensor disposed in or near to the stagnation region; and a sensor interrogation system for measuring the temperature sensed by the temperature sensor and interpreting the measured temperature in order to derive a total air temperature. A corresponding method of sensing total air temperature is also disclosed.

## Description

This invention relates to a total air temperature sensing device and an associated method of sensing total air temperature, with particular, but by no means exclusive, reference to total air temperature sensing devices for aircraft.

Aircraft require accurate temperature measurements which are input to their onboard airborne systems. Accurate temperature measurements are required so that the engine control can be set appropriately and managed dynamically. It is desirable to measure total air temperature (TAT), and commonly this has been performed using "Rosemount" total temperature sensors, manufactured by Rosemount Inc, Minneapolis, Minnesota, USA. However, these sensors do not provide a direct measurement of total air temperature, but rather require the use of an empirical conversion factor. Also, the usual sampling rate associated with these sensors is around 0.5 Hz. It would be highly desirable to provide TAT sensors which can provide a more direct measurement of TAT. Additionally, it would be highly desirable to provide a TAT sensor which can operate at higher sampling frequencies.

The present invention, in at least some of its embodiments, addresses the above described problems and desires.

According to a first aspect of the invention there is provided a total air temperature sensing device including;
a conduit through which an airflow can be maintained;
a cross member housed in the conduit and having a leading edge which is profiled so as to bring a portion of the airflow to rest at a stagnation region on the cross member;
at least one temperature sensor disposed in or near to the stagnation region; and
a sensor interrogation system for measuring the temperature sensed by the temperature sensor and interpreting the measured temperature in order to derive a total air temperature.

The use of a cross member which is shaped to provide a stagnation region is advantageous, because it is a convenient means of bringing the airflow to a standstill which does not require any moving parts. In bringing a moving airflow to a standstill, kinetic energy of the moving airflow is converted into heat. As a result, the temperature at or close to the stagnation region is closely related to the total air temperature.

In a preferred embodiment, the cross member is a cylinder or a modified cylinder. Suitable cylinders can take various shapes, including a right circular cylinder, i.e. a body with parallel circular bases and a wall of constant circular cross section. Other curved cross sections might be contemplated. The skilled reader will appreciate that other sorts of cross member might be used which are capable of producing a stagnation region in an airflow, including various tubular cross members, such as cross members having a rectangular cross section. The cross sectional area and/or cross sectional shape of the cross member may vary as a function of length, e.g. the ends of the cross member may taper.

In certain preferred embodiments, the leading edge of the cross member includes a substantially flat face. The provision of a flat face is particularly advantageous for ease of mounting temperature sensors thereon. The cross member may be a modified cylinder having a substantially flat face which acts as the leading edge. Other cross member configurations having a substantially flat face might be used.

In other preferred embodiments, the leading edge of the cross member includes first and second spaced apart longitudinally extending projections which project into the airflow, the temperature sensor being disposed between said projections. The first and second spaced apart projections may define the upper and lower portions of the leading edge respectively. Advantageously, the leading edge of the cross member includes a substantially flat face which has the first and second spaced apart longitudinally extending projections projecting into the airflow.

Preferably, the temperature sensor is a resistance temperature sensor. In particularly preferred embodiments, the temperature sensor is a platinum resistance sensor, although other resistance sensors, such as tungsten, copper, nickel or alloy resistance sensors, may be contemplated.

Preferably, the temperature sensor is a hot film sensor.

Advantageously, the temperature sensor is a microsensor. It is readily possible to provide microsensors having low thermal mass and rapid response times. This is advantageous since it enables the device to be operated at high sampling frequencies. Generally, the dimensions of the microsensor are less than 1000µm, and preferably are less than 100µm. Sizes down to 20µm can be manufactured with comfortable accuracy. Microsensors of these sizes may be readily produced by modern microfabrication techniques such as MEMS. The active sensing portion of the temperature sensor mounted on the cross member may be less than 1000µm, often considerably less than 100µm. A further advantage is that microsensors are of a convenient size to be incorporated in cross members of the typical sizes which are most suitable for use in aircraft.

Advantageously, the temperature sensor is a thin film sensor. Thin film sensors are typically of low thermal mass, and so can be used to achieve high frequency responses. A thin film temperature sensor may have an active sensing area having a nanoscale thickness, e.g. a thickness of less than 1 µm. The use of a thin film resistance temperature sensor, such as a thin film platinum temperature sensor is preferred.

Preferably, the cross sectional dimensions of the cross member at the stagnation region are in the range 0.25 mm to 5 mm, preferably 0.5 mm to 3 mm, most preferably 0.75 mm to 2.5 mm. These cross sectional dimensions are compatible with the typical conduit dimensions utilised in aircraft for temperature sensing purposes.

The device may include a single temperature sensor.

In other embodiments, the device includes an array of temperature sensors which is disposed in or near to the stagnation region. Preferably, the device includes a radially disposed array of temperature sensors. Additionally, or alternatively, the device may include a longitudinally disposed array of temperature sensors. The use of an array of temperature sensors can assist in taking account of any errors caused by misalignment of the airflow and the cross member, for example in the precise location of the stagnation region.

In embodiments in which an array of temperature sensors is used, the sensor interrogation system may measure the temperature sensed by the temperature sensors in the array, and relate the highest measured value to the total air temperature. Without wishing to be bound by any particular theory, it is anticipated that the highest measured temperature will occur at the stagnation region, where (neglecting any heat transfer effects) all of the kinetic energy of the airflow is converted into heat that raises the measured temperature.

Advantageously, the sensor element interrogation system is configured to provide total air temperature measurements at a frequency of at least 10 Hz, preferably having a frequency of at least 50 Hz.

Typically, the cross member is housed in the conduit by arranging the cross member so that it extends transversely across the conduit from one side of the conduit to the other. However, other housing arrangements might be contemplated.

A total air temperature sensing device of the invention may be incorporated into aircraft. Appropriate inlet, particle separator and de-icing apparatus would be included as is known to the skilled person.

According to a second aspect of the invention there is provided a kit of parts for assembly into a total air temperature sensing device of the first aspect of the invention.

According to a third aspect of the invention there is provided a method of sensing total air temperature including the steps of:
maintaining an airflow through a conduit which has a cross member housed therein;
bringing a portion of the airflow to rest at a stagnation region on a leading edge of the cross member;
measuring the temperature in or near to the stagnation region using at least one temperature sensor disposed in or near to the stagnation region; and
interpreting the measured temperature in order to derived a total air temperature.

Whilst the invention has been described above, it extends to any inventive combination as set out above or in the following description, drawings or claims.

Embodiments of devices and methods in accordance with the invention will now be described with reference to the accompanying drawings, in which:
Figure 1 shows a device of the invention;
Figure 2 shows (a) a first and (b) a second alternative cross member cross section;
Figure 3 is a cross sectional view of a hot film temperature sensor;
Figure 4 shows a conduit/cylindrical cross member configuration used for flow simulations in which the diameter of the cross member is (a) 0.5 mm (b) 1 mm and (c) 2 mm; and
Figure 5 shows simulated temperatures on the cross members of Figure 4 having diameters of (a) 0.5 mm (b) 1 mm (c) 2 mm and (d) shows a legend.

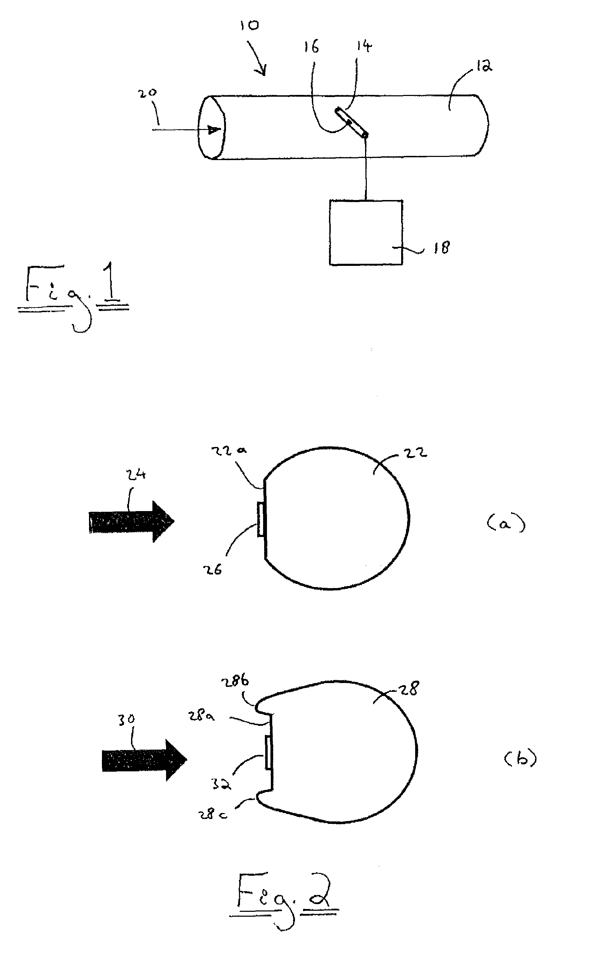

Figure 1 is a semi-schematic drawing of a device of the invention, shown generally at 10, which comprises a conduit 12 containing a cross member 14 which extends from one side of the conduit 12 to the other. The conduit 12 acts as a passageway along which an airflow, depicted at 20, can be developed. It will be appreciated that the airflow may to be developed by motion of a body of air relative to the conduit 12 (such as a wind), by motion of the conduit 12 relative to a mass of air (such as through forward motion of the device 10 when incorporated, for example, in an aircraft), or a combination of the two. The cross member is capable of bringing the airflow 20 to rest at a stagnation region on its leading edge. Disposed in the stagnation region on the leading edge is a temperature sensor 16, which is controlled and monitored by a sensing arrangement 18. In the example shown in Figure 1, both the conduit 12 and the cross member 14 are cylindrical. However, other configurations for both the conduit and cross member can be used.

Figure 2 shows alternative configurations for the cross member. More particularly, Figure 2a shows a cross member 22 which is in the form of a modified cylinder having a substantially "D" cross sectional shape with a flat face 22a which faces the airflow 24. A temperature sensor 26 is disposed on the flat face 22a. The provision of the flat face 22a is convenient for mounting a temperature sensor thereon. Figure 2b shows a variant of the "D" shaped cross member of Figure 2a. More particularly, Figure 2b shows a cross member 28 having a substantially flat face 28a which is bounded on the upper and lower edges by projections 28b, 28c, respectively. The flat face 28a and projections 28b, 28c face the airflow 30, and a temperature sensor 32 is mounted on the flat face 28a. The cross member geometry shown in Figure 2b is considered to be less susceptible to errors caused by any misalignment of the airflow and the longitudinal axis of the cylinder.

Many forms of temperature sensor can be incorporated into devices of the invention. Various forms of resistance thermometer devices (RTDs) can be used. RTDs which use platinum active sensor elements are preferred, in part due to the excellent absolute accuracy of temperature measurement and chemical inertness of this material. However, RTDs which use other materials as sensor elements, such as tungsten, copper, nickel, or an alloy, might be utilised.

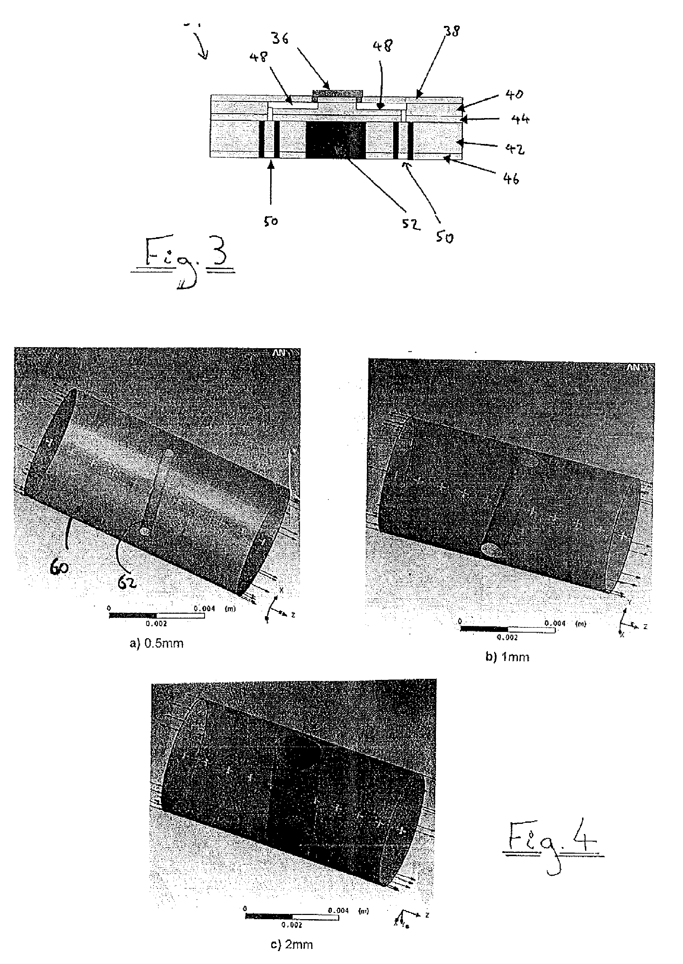

It is preferred that the temperature sensors are produced by microfabrication techniques. Thin film temperature sensors can be incorporated into devices of the invention. Thin film sensors can have low thermal mass and are capable of exhibiting high frequency responses. Frequency responses of the order of 10 kHz have been demonstrated in previous work undertaken by the applicant. Furthermore, temperature sensors of this type can provide high sensitivity at modest input power levels. Figure 3 shows a thin film resistance temperature sensor, depicted generally at 34, which has a thin layer 36 of an active sensing material, such as platinum or tungsten. The thickness of the thin layer is typically on a nanoscale, for example, around 300 nm. The temperature sensor 34 further comprises a silicon nitride top layer 38 of around 1 µm thickness, which is disposed on top of a polyimide layer 40 of about 6 µm thickness. The polyimide layer 40 is disposed on a low resistivity silicon substrate which consists of a silicon layer 42 of about 250 µm thickness having upper layer 44 (of about 0.6 µm thickness) and a lower layer 46 (of about 0.3 µm thickness) of silicon oxide. Resistor leads 48 are provided which are in connection to the thin film 36, with all of the metallisation being brought out on the underside of the dye by virtue of through wafer interconnections 50. The sensor 34 further comprises a membrane cavity 52. The sensor can be realised using silicon MEMS technology. It is noted that the microstructuring of the silicon and polyimide layers gives rise to good thermal isolation of the sensor, and that the through-wafer interconnections ensure that the sensor does not receive interrupted airflow due to the topography of the interconnect. Optionally, thin film coatings can be deposited over the resistive film element 36 to enhance environmental robustness. The interconnect metallisation may be any suitable metal such as gold or aluminium. The tracking can be brought out along a suitable path, for example along the longitudinal axis of the cross member, to a suitable point where it can be connected to an interrogation system by wire bonding, solder pad, or other suitable technology.

Computer simulations of the performance of devices of the invention have been performed using ANSYS DesignModeler (ANSYS Inc, Canonsburg, PA, USA). Figure 4 shows the scenario as modelled, in which a cylindrical conduit 60 is used to house a cylinder 62 which is positioned in cross-flow at the centre of the conduit 60. The conduit 60 is of 10 mm length and 5 mm diameter. Three sizes of cross-flow cylinder 62 were investigated, namely cylinders of 0.5 mm, 1 mm and 2 mm diameter, shown in Figures 4a, b, c respectively. It was found that a high mesh density was required in order to resolve the flow around the leading edge of the cross-flow cylinder 62. The "standard" mesh density for the 0.5 mm diameter, 1 mm diameter, and 2 mm diameter cylinders was 626475, 3346985 and 2808368, respectively. The fine mesh used to resolve flow around the leading edge of the 0.5 diameter cylinder was 5913254. The air and TAT domain wall temperatures was 298 K and 203 K respectively. This corresponds to a relatively extreme situation where the air is hot, and the wall is cold, a situation that can occur on a rapid descent to near sea level in a hot location after cruising at altitude at a considerable time. The mass flow rate at the exit plane was based on the density of air, the domain exit plane area, and the free stream velocity. In the simulation reported herein, a freestream velocity of 5 m/s was investigated. An adiabatic wall condition was employed for the cross-flow cylinder 62.

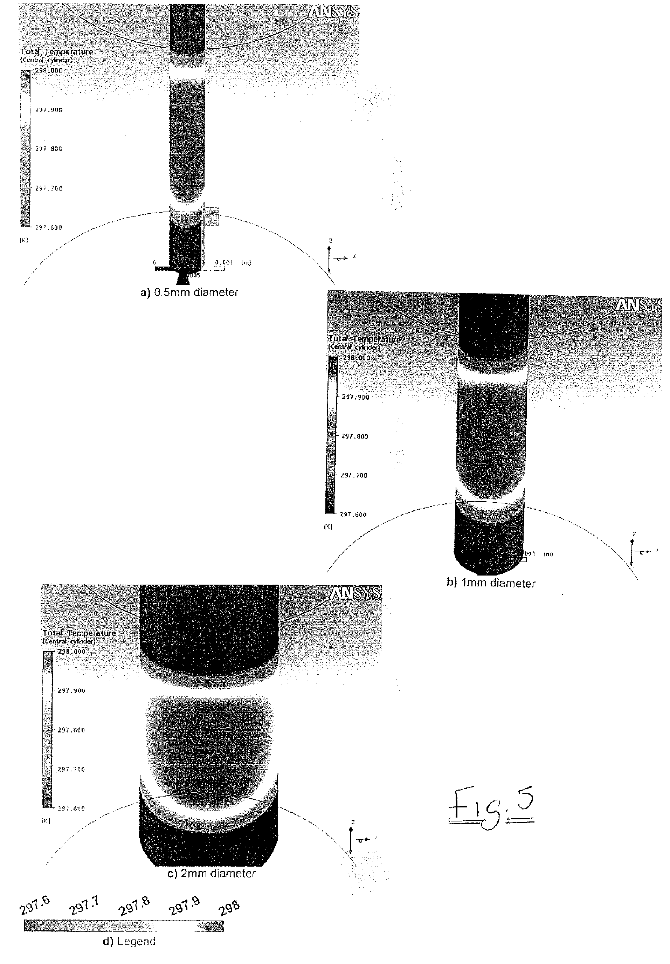

The results of the simulation are shown in Figure 5, where it can be seen that the stagnation temperature (TAT) of 298 K is reached over a large section of all of the cylinders.

Although the use of a single temperature sensor is within the scope of the invention, it is considered to be advantageous to employ an array of temperature sensors in devices of the invention. Given that microfabricated temperature sensors can be manufactured with comfortable accuracy at sizes down to 20 µm, it is feasible to dispose an array of such sensors on the leading edge of a cylinder or modified cylinder of the dimensions shown in Figures 4 and 5 in order to measure TAT at the stagnation region. The use of an array of sensors ensures that sensor redundancy is built into the device, and also addresses any potential problems associated with misalignment of the cross member with the flow, for example, if the flow is not truly axial within the conduit. The provision of an array of sensors can ensure that at least one sensor is within the stagnation region even if the flow is not properly aligned. A radial array of temperature sensors is particularly useful in this regard, i.e. an array which is circumferentially located on the cross member. It can also be advantageous to provide an array of temperature sensors which is longitudinally arranged on the cross member, i.e. an array having sensors which are disposed along the major axis of the cross member. It is possible to provide an array of temperature sensors which is both radially and longitudinally arranged on the cross member. Generally, with an array of temperature sensors, the highest temperature recorded on the array will be taken to correspond to the TAT. The skilled reader will appreciate that various methodologies could be used in order to assign a highest temperature. This may be the highest individual temperature recorded by an individual temperature sensor in the array, or it may be an average value of the temperature sensors providing the highest recorded temperatures.

Devices of the present invention find particular application in aircraft. Additional components, such as an appropriate inlet, particle separator and a de-icing system, can be provided as necessary. However, the invention is not limited to aeronautical uses, but rather applies to the measurement of TAT per se.

## Claims

1. A total air temperature sensing device including:
a conduit through which an air flow can be maintained;
a cross member housed in the conduit and having a leading edge which is profiled so as to bring a portion of the air flow to rest at a stagnation region on the cross member;
at least one temperature sensor disposed in or near to the stagnation region; and
a sensor interrogation system for measuring the temperature sensed by the temperature sensor and interpreting the measured temperature in order to derive a total air temperature.

2. A total air temperature sensing device according to claim 1 in which the cross member is a cylinder or a modified cylinder.

3. A total air temperature sensing device according to claim 1 or claim 2 in which the leading edge of the cross member includes a substantially flat face.

4. A total air temperature sensing device according to any previous claim in which the leading edge of the cross member includes first and second spaced apart longitudinally extending projections which project into the air flow, the temperature sensor being disposed between said projections.

5. A total air temperature sensing device according to claim 4 in which the first and second spaced apart projections define the upper and lower portions of the leading edge, respectively.

6. A total air temperature sensing device according to any previous claim in which the temperature sensor is a resistance temperature sensor.

7. A total air temperature sensing device according to any previous claim in which the temperature sensor is a hot film sensor.

8. A total air temperature sensing device according to any previous claim in which the dimensions of the temperature sensor are less than 1000µm, preferably less than 100µm.

9. A total air temperature sensing device according to any previous claim in which the temperature sensor is a thin film sensor.

10. A total air temperature sensing device according to any previous claim in which cross sectional dimensions of the cross member at the stagnation region are in the range 0.25mm to 5mm, preferably 0.5mm to 3mm, most preferably 0.75mm to 2.5mm.

11. A total air temperature sensing device according to any previous claim in which an array of temperature sensors is disposed in or near to the stagnation region.

12. A total air temperature sensing device according to claim 11 in which the array of temperature sensors is radially disposed on the cross member.

13. A total air temperature sensing device according to claim 11 or claim 12 in which the sensor interrogation system measures the temperatures sensed by the temperature sensors in the array, and relates the highest measured value to the total air temperature.

14. A total air temperature sensing device in which the sensor element interrogation system is configured to provide total air temperature measurements at a frequency of at least 10Hz, preferably at a frequency of at least 50Hz.

15. A method of sensing total air temperature including the steps of:
maintaining an air flow through a conduit which has a cross member housed therein;
bringing a portion of the air flow to rest at a stagnation region on a leading edge of the cross member;
measuring the temperature in or near to the stagnation region using at least one temperature sensor disposed in or near to the stagnation region; and
interpreting the measured temperature in order to derive a total air temperature.
